# FASCICULE DE BREVET EUROPEEN

(11) **EP 3 010 738 B1**
(45) Date de publication et mention de la délivrance du brevet: **02.08.2017**
(21) Numéro de dépôt: 14736906.0
(22) Date de dépôt: 16.06.2014
(51) Int. Cl.: B60H 1/34, B60H 3/02

(54) **DISPOSITIF DE DISTRIBUTION D'AIR À OBTURATEURS COUPLÉS À UNE BUSE COULISSANTE DE DISTRIBUTION DE PETITES GOUTTES DE LIQUIDE**
LUFTAUSGABEVORRICHTUNG MIT AN EINE SCHIEBEDÜSE GEKOPPELTEN BLENDEN ZUR AUSGABE KLEINER TRÖPFCHEN
AIR DISPENSING DEVICE WITH SHUTTERS COUPLED TO A SLIDING NOZZLE FOR DISPENSING SMALL DROPS OF LIQUID

(30) Priorité: 17.06.2013 FR 1355621
(43) Date de publication de la demande: 27.04.2016
(73) Titulaire: Peugeot Citroën Automobiles SA, 78140 Vélizy Villacoublay (FR)
(72) Inventeur: PINTAT, Bruno, F-92140 Clamart (FR); DUMUR, Denis, F-78990 Elancourt (FR); KERVAREC, Florian, F-91310 Longpont Sur Orge (FR); DERANLOT, Christophe, F-78380 Bougival (FR); HILLAIRET, Blandine, F-92500 Rueil Malmaison (FR)
(86) Numéro de dépôt international: PCT/FR2014/051473
(87) Numéro de publication internationale: WO 2014/202884

(56) Documents cités:
- EP-A1- 1 980 433
- WO-A1-2011/021708
- JP-A- H06 115 347
- JP-A- S62 155 122

## Description

L'invention concerne les dispositifs qui sont destinés à distribuer de l'air rafraîchi dans une enceinte d'un système.

On entend ici par « enceinte » un habitacle de véhicule, éventuellement de type automobile, ou une pièce ou salle d'un bâtiment, ou encore une véranda.

Plusieurs solutions ont été proposées pour rafraîchir un flux d'air devant alimenter une enceinte. Ainsi, lorsque l'enceinte est un habitacle de véhicule, il a été proposé d'utiliser une ventilation réfrigérée par nébulisation ou brumisation avec un relais via l'installation de climatisation principale de ce véhicule, ou bien un dispositif de nébulisation ou brumisation comprenant son propre pulseur d'air, éventuellement du type de celui qui est décrit dans les documents brevet FR 10 58448 et FR 12 52288.

On connait également du document WO2011021708, un dispositif conforme à l'objet du préambule de la revendication 1.

Il est rappelé que la nébulisation et la brumisation sont des techniques destinées à mélanger de (très) petites gouttes de liquide à un flux d'air afin de donner une impression de fraicheur.

Les solutions connues précitées présentent toutes au moins un inconvénient. En effet, les petites gouttes produites sont injectées dans le conduit dans lequel circule le flux d'air en amont de son extrémité qui alimente l'enceinte et qui comprend le dispositif de distribution d'air (ou aérateur), ce qui induit dans cette extrémité et dans cet aérateur de la condensation et une formation de gouttes. Cette condensation favorise le développement de bio films et/ou de bactéries et/ou d'algues qui peuvent induire des odeurs nauséabondes dans le flux d'air traité, ce qui contraint à mettre en oeuvre des stratégies d'assainissement qui nécessitent généralement l'utilisation de produits désinfectants et donc augmentent sensiblement les coûts de fabrication et d'utilisation. De plus, les gouttes peuvent être emportées par le flux d'air à rafraichir et donc peuvent être projetées dans l'enceinte, ce qui s'avère désagréable pour les occupants et/ou peut provoquer sur les objets sur lesquels elles se déposent des tâches qui nuisent à la qualité perçue.

L'invention a donc pour but d'améliorer la situation.

Elle propose notamment à cet effet un dispositif de distribution d'air conforme à l'objet de la partie caractérisante de la revendication 1.

Grâce à cette distribution des petites gouttes de liquide en aval des moyens d'obturation, et donc en aval de la première extrémité du conduit d'alimentation en air, on ne risque plus d'induire de la condensation ou une formation de gouttes dans ce conduit et sur les moyens d'obturation, ce qui évite non seulement les désagréments (odeurs nauséabondes et projection de gouttes) mais également la formation de tâches.

Le dispositif de distribution d'air selon l'invention peut comporter d'autres caractéristiques qui peuvent être prises séparément ou en combinaison, et notamment :
- ses moyens de couplage peuvent être de type mécanique ;
   ➢ dans un premier mode de réalisation, ses moyens de couplage peuvent comprendre au moins un lien comprenant une première extrémité solidarisée aux moyens d'obturation et une seconde extrémité opposée à la première extrémité et solidarisée à la buse ;
      o ses moyens de couplage peuvent comprendre deux liens solidarisés aux moyens d'obturation et à la buse en deux endroits différents ;
      o chaque lien peut être un ressort de type spiral ;
   ➢ dans un second mode de réalisation, ses moyens de couplage peuvent comprendre au moins deux roues dentées qui s'engrènent et qui pour l'une d'entre elles est solidarisée à la buse ;
- ses moyens d'obturation peuvent être montés à rotation sur son corps ;
- la seconde extrémité du tuyau peut être solidarisée fixement au corps dans une partie centrale de ce dernier qui correspond sensiblement au centre de la première extrémité du conduit.

L'invention propose également un véhicule, éventuellement de type automobile, et comprenant un habitacle définissant une enceinte et au moins un dispositif de distribution d'air du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe, une partie d'une planche de bord de véhicule comprenant un conduit d'alimentation en air ayant une extrémité équipée d'un exemple de réalisation d'un dispositif de distribution d'air selon l'invention avec ses moyens d'obturation en position fermée, et
- la figure 2 illustre schématiquement, dans une vue en coupe, la partie de la planche de bord de la figure 1 avec les moyens d'obturation du dispositif de distribution d'air en position ouverte.

L'invention a notamment pour but de proposer un dispositif de distribution d'air (ou aérateur) D destiné à équiper une première extrémité E1 d'un conduit CD propre à alimenter en air éventuellement rafraîchi une partie d'une enceinte H d'un système.

On considère dans ce qui suit, à titre d'exemple non limitatif, que l'enceinte H est un habitacle de véhicule automobile, comme par exemple une voiture. Mais l'invention n'est pas limitée à ce type d'enceinte. Elle concerne en effet tout type d'enceinte faisant partie d'un système, et notamment les habitacles de véhicule, quel qu'en soit le type, les pièces ou salles de bâtiments, et les vérandas.

Par ailleurs, on considère dans ce qui suit, à titre d'exemple non limitatif, que le dispositif de distribution d'air D est destiné à être implanté dans une planche de bord PB d'un véhicule, afin de participer au confort thermique des passagers avant de ce véhicule (au moins). Mais l'invention n'est pas limitée à ce type d'implantation. Ainsi, un dispositif de distribution d'air D peut être également implanté dans un pavillon (ou toit) d'un véhicule, dans une console centrale installée entre deux sièges d'un véhicule, dans un siège d'un véhicule, dans un mur ou un faux plafond d'un bâtiment, ou sur un montant de véranda, par exemple.

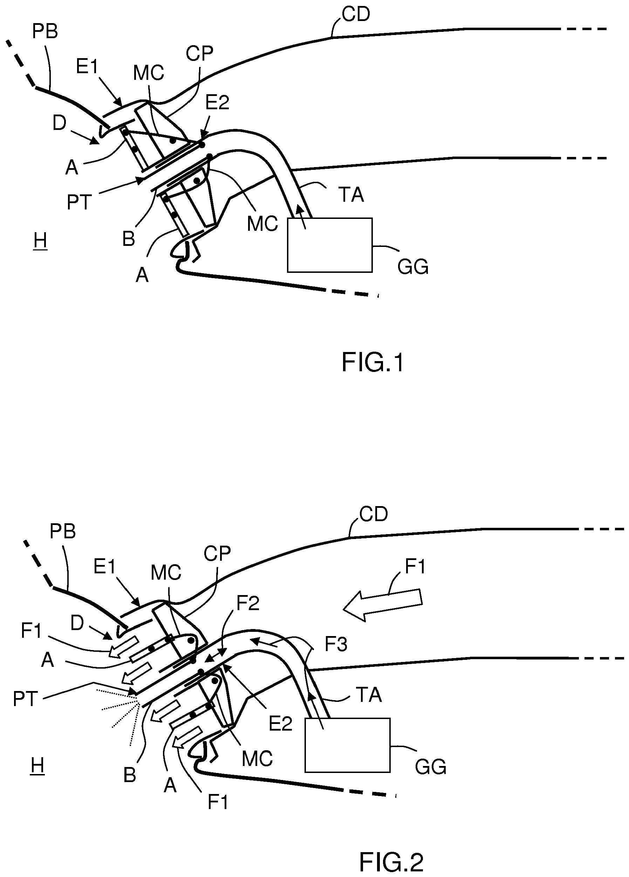

On a schématiquement représenté sur les figures 1 et 2 une partie d'un conduit (d'alimentation en air) CD, ici installée dans une planche de bord PB d'un véhicule, et équipée d'un dispositif de distribution d'air D selon l'invention.

Comme illustré, un dispositif (de distribution d'air) D, selon l'invention, comprend au moins un corps CP, des moyens d'obturation (ou obturateurs) A, une buse B et des moyens de couplage MC.

Le corps CP est un support de moyens d'obturation A qui est agencé de manière à être installé dans la première extrémité E1 du conduit CD, laquelle est solidarisée (ici) à la planche de bord PB dans un orifice dédié.

Le conduit CD est agencé de manière à permettre la canalisation ou circulation (flèche F1) d'un flux d'air qui est destiné à alimenter l'enceinte H (ici une partie d'un habitacle de véhicule), et qui peut être fourni par un pulseur (non représenté) ou par une installation de chauffage/climatisation faisant partie du système comportant l'enceinte H (ici un véhicule) et chargée de contrôler l'aérothermie de cette enceinte H.

Les moyens d'obturation A sont solidarisés (non fixement) au corps CP. Ils sont propres à être placés par les moyens de couplage MC entre une position fermée qui interdit l'alimentation en air de l'enceinte H et qui est illustrée sur la figure 1, et une position ouverte qui autorise l'alimentation en air de l'enceinte H et qui est illustrée sur la figure 2.

Ces moyens d'obturation A sont par exemple montés à rotation sur le corps CP. Ils peuvent être couplés entre eux via des tringles ou au moins une came. Leur position par rapport au corps CP peut être contrôlée manuellement par un usager dans le but de choisir la direction suivant laquelle le flux d'air doit pénétrer dans l'enceinte H et/ou le débit de ce flux d'air. On notera que ce contrôle de position peut être éventuellement réalisé par entraînement en rotation par un passager d'une pièce centrale rotative du corps PC.

Ces moyens d'obturation (ou obturateurs) A peuvent se présenter sous la forme d'au moins deux clapets ou d'au moins deux ailettes.

La buse B est montée à coulissement dans une seconde extrémité E2 d'un tuyau TA qui est propre à canaliser des petites gouttes de liquide qui sont issues (flèche F3), sur commande, d'un générateur de gouttes GG. Cette seconde extrémité E2 du tuyau TA est solidarisée au corps CP.

On notera, comme illustré non limitativement sur les figures 1 et 2, que la seconde extrémité E2 du tuyau TA est de préférence solidarisée fixement au corps CP dans une partie centrale de ce dernier (CP) qui correspond sensiblement au centre de la première extrémité E1 du conduit CD. Les petites gouttes peuvent ainsi être distribuées (ou diffusées) sensiblement dans l'axe de l'aérateur D, ce qui permet d'optimiser le mélange air/liquide. Mais un placement de la seconde extrémité E2 dans une position décentrée peut être envisagé.

Le générateur de gouttes GG peut mettre en oeuvre n'importe quelle technique de production de petites gouttes de liquide connue de l'homme de l'art, et notamment la nébulisation, la brumisation ou la pulvérisation.

La nébulisation est une technique avantageuse du fait qu'elle permet de produire, sous la forme d'un «brouillard» ou d'une «brume», des gouttes de très petit diamètre (typiquement compris entre environ 2 µm et environ 5 µm) qui, une fois mélangées à un flux d'air, permettent à ce dernier de procurer une sensation de fraicheur à des passagers. Toute technique de nébulisation connue de l'homme de l'art, y compris miniaturisée, peut être ici utilisée. A titre d'exemple, il peut s'agir d'une technique par effet piézoélectrique, bien connue de l'homme de l'art. Il est rappelé que cette technique utilise au moins un oscillateur piézoélectrique (éventuellement miniaturisé), couplé à une chambre de nébulisation et vibrant à très haute fréquence lorsqu'il est alimenté en tension (ici par le réseau électrique du véhicule). Par exemple, dans le cas d'un nébuliseur ultrasonique, la surface vibrante est actionnée par des ultrasons (c'est-à-dire selon une fréquence supérieure à 20000 Hz). Cet oscillateur piézoélectrique est immergé dans le liquide à nébuliser afin de générer à la surface de ce le liquide une brume ou un brouillard composé(e) de gouttelettes de dimensions microscopiques qui sont entrainées par dépression ou au moyen d'un petit flux d'air généré par un ventilateur.

On notera que le générateur de gouttes GG peut être agencé de manière à alimenter en parallèle au moins deux conduits CD équipés chacun de leur aérateur D.

Les moyens de couplage MC assurent un couplage entre la buse B et les moyens d'obturation A. Ils sont agencés de manière à faire coulisser la buse B entre une position arrière (ou rentrée) et une position avant (ou avancée), suivant la direction F2.

Dans sa position arrière (ou rentrée), la buse B comprend une partie terminale PT avant qui est logée dans la première extrémité E1 du fait du placement des moyens d'obturation A dans leur position fermée (voir figure 1). Dans la position avant (ou avancée) la partie terminale PT de la buse B est placée à l'extérieur de la première extrémité E1 du fait du placement des moyens d'obturation A dans leur position ouverte (voir figure 2), ce qui permet de délivrer (ou distribuer) les petites gouttes en aval des moyens d'obturation A pour qu'elles soient mélangées au flux d'air F1 sortant par la première extrémité E1 du conduit CD.

De préférence, lorsque la buse B est dans sa position arrière (ou rentrée), sa partie terminale PT affleure sensiblement au niveau des ailettes ou clapets A. Cela permet avantageusement d'asservir le style à la fonction de distribution d'air.

Afin de permettre le coulissement de la buse B dans la seconde extrémité E2, les moyens de couplage MC sont de préférence de type mécanique. Pour ce faire, ils peuvent, par exemple, comprendre au moins un lien comportant une première extrémité solidarisée aux moyens d'obturation A et une seconde extrémité opposée à la première extrémité et solidarisée à la buse B ou bien à un élément (non représenté) assurant le couplage entre les moyens d'obturation A.

Dans l'exemple de réalisation non limitatif illustré sur les figures, les moyens de couplage MC comprennent deux liens solidarisés aux moyens d'obturation A et à la buse B en deux endroits différents.

On notera que chaque lien peut être de type non élastique (comme par exemple un câble) ou bien de type élastique (comme par exemple un ressort de type spiral).

Dans une variante de réalisation non représentée, les moyens de couplage MC peuvent comprendre au moins deux (portions de) roues dentées (ou de pignons) qui s'engrènent. Dans ce cas, l'une des (portions de) roues dentées est solidarisée à la buse B et une autre (portion de) roue dentée est solidarisée à une ailette ou un clapet A ou bien à un élément (non représenté) assurant le couplage entre les moyens d'obturation A.

L'invention offre plusieurs avantages, parmi lesquels :
- une optimisation du mélange air/liquide qui permet une meilleure évaporation des petites gouttes et donc un meilleur rendement de rafraîchissement,
- une probabilité nulle de développement de bio films et/ou de bactéries et/ou d'algues dans le conduit d'alimentation en air et sur les obturateurs, ce qui permet d'éviter la mise en oeuvre de stratégies d'assainissement,
- la possibilité de faire affleurer la partie terminale avant de la buse sensiblement au niveau des obturateurs rabattus (ou en position fermée), lorsque cette buse est en position arrière (ou rentrée), notamment pour une question de style.

## Revendications

1. Dispositif de distribution d'air (D) pour une première extrémité (E1) d'un conduit (CD) propre à alimenter en air une enceinte (H) d'un système, ledit dispositif (D) comprenant un corps (CP) propre à être installé dans ladite première extrémité (E1) et auquel sont solidarisés des moyens d'obturation (A) propres à être placés entre au moins une position fermée et une position ouverte interdisant et autorisant ladite alimentation de l'enceinte (H) respectivement, **caractérisé en ce qu'**il comprend en outre i) une buse (B) montée à coulissement dans une seconde extrémité (E2) faisant partie d'un tuyau (TA), propre à canaliser des petites gouttes de liquide, et solidarisée audit corps (CP), et ii) des moyens de couplage (MC) propres à faire coulisser ladite buse (B) entre une position arrière dans laquelle elle comprend une partie terminale (PT) logée dans ladite première extrémité (E1) lorsque lesdits moyens d'obturation (A) sont dans leur position fermée, et une position avant dans laquelle sa partie terminale (PT) est placée à l'extérieur de ladite première extrémité (E1) lorsque lesdits moyens d'obturation (A) sont dans leur position ouverte, afin de délivrer lesdites petites gouttes en aval desdits moyens d'obturation (A) pour qu'elles soient mélangées au flux d'air sortant par ladite première extrémité (E1).

2. Dispositif selon la revendication 1, **caractérisé en ce que** lesdits moyens de couplage (MC) sont de type mécanique.

3. Dispositif selon la revendication 2, **caractérisé en ce que** lesdits moyens de couplage (MC) comprennent au moins un lien comprenant une première extrémité solidarisée auxdits moyens d'obturation (A) et une seconde extrémité opposée à la première extrémité et solidarisée à ladite buse (B).

4. Dispositif selon la revendication 3, **caractérisé en ce que** lesdits moyens de couplage (MC) comprennent deux liens solidarisés auxdits moyens d'obturation (A) et à ladite buse (B) en deux endroits différents.

5. Dispositif selon l'une des revendications 3 et 4, **caractérisé en ce que** chaque lien (MC) est un ressort de type spiral.

6. Dispositif selon la revendication 2, **caractérisé en ce que** lesdits moyens de couplage (MC) comprennent au moins deux roues dentées qui s'engrènent et qui pour l'une d'entre elles est solidarisée à ladite buse (B).

7. Dispositif selon l'une des revendications 1 à 6, **caractérisé en ce que** lesdits moyens d'obturation (A) sont montés à rotation sur ledit corps (CP).

8. Dispositif selon l'une des revendications 1 à 7, **caractérisé en ce que** ladite seconde extrémité (E2) du tuyau (TA) est solidarisée fixement audit corps (CP) dans une partie centrale de ce dernier (CP) qui correspond sensiblement au centre de ladite première extrémité (E1) du conduit (CD).

9. Véhicule comprenant un habitacle définissant une enceinte (H), **caractérisé en ce qu'**il comprend au moins un dispositif de distribution d'air (D) selon l'une des revendications précédentes.

10. Véhicule selon la revendication 9, **caractérisé en ce qu'**il est de type automobile.

## Patentansprüche

1. Luftausgabevorrichtung (D) für ein erstes Ende (E1) einer Leitung (CD), die geeignet ist, einen Einschluss (H) eines Systems mit Luft zu versorgen, wobei die Vorrichtung (D) einen Körper (CP) umfasst, der geeignet ist, um in dem ersten Ende (E1) installiert zu sein, und mit dem Verschlussmittel (A) fest verbunden sind, die geeignet sind, um zwischen mindestens einer geschlossenen Position und einer offenen Position platziert zu sein, die die Versorgung des Einschlusses (H) jeweils verbieten und gestatten, **dadurch gekennzeichnet, dass** sie außerdem i) eine Düse (B) umfasst, die gleitend in einem zweiten Ende (E2) montiert ist, das zu einem Schlauch (TA) gehört, der geeignet ist, um kleine Flüssigkeitstropfen zu kanalisieren, und fest mit dem Körper (CP) verbunden ist, und ii) Kopplungsmittel (MC), die geeignet sind, um die Düse (B) zwischen einer hinteren Position, in der sie einen Endteil (PT) umfasst, der in dem ersten Ende (E1) untergebracht ist, wenn die Verschlussmittel (A) in ihrer geschlossenen Position sind, und einer vorderen Position, in der ihr Endteil (PT) außerhalb des ersten Endes (E1) platziert ist, wenn die Verschlussmittel (A) in ihrer offenen Position sind, gleiten zu lassen, um die kleinen Tropfen stromabwärts der Verschlussmittel (A) zu liefern, damit sie mit dem Luftstrom, der aus dem ersten Ende (E1) austritt, gemischt werden.

2. Vorrichtung nach Anspruch 1, **dadurch gekennzeichnet, dass** die Kopplungsmittel (MC) des mechanischen Typs sind.

3. Vorrichtung nach Anspruch 2, **dadurch gekennzeichnet, dass** die Kopplungsmittel (MC) mindestens eine Verbindung umfassen, die ein erstes Ende umfasst, das fest mit den Verschlussmittel (A) verbunden ist, und ein zweites Ende, das dem ersten Ende entgegengesetzt und mit der Düse (B) fest verbunden ist.

4. Vorrichtung nach Anspruch 3, **dadurch gekennzeichnet, dass** die Kopplungsmittel (MC) zwei Verbindungen umfassen, die fest mit den Verschlussmitteln (A) und der Düse (B) an zwei unterschiedlichen Stellen verbunden sind.

5. Vorrichtung nach einem der Ansprüche 3 und 4, **dadurch gekennzeichnet, dass** jede Verbindung (MC) eine Feder des Spiraltyps ist.

6. Vorrichtung nach Anspruch 2, **dadurch gekennzeichnet, dass** die Kopplungsmittel (MC) mindestens zwei Zahnräder umfassen, die ineinander eingreifen, und von welchen eines fest mit der Düse (B) verbunden ist.

7. Vorrichtung nach einem der Ansprüche 1 bis 6, **dadurch gekennzeichnet, dass** die Verschlussmittel (A) in Drehung auf dem Körper (CP) montiert sind.

8. Vorrichtung nach einem der Ansprüche 1 bis 7, **dadurch gekennzeichnet, dass** das zweite Ende (E2) des Schlauchs (TA) fest mit dem Körper (CP) in einem zentralen Teil dieses Letzteren (CP), der im Wesentlichen der Mitte des ersten Endes (E1) der Leitung (CD) entspricht, verbunden ist.

9. Fahrzeug, das einen Fahrzeuginnenraum umfasst, der einen Einschluss (H) definiert, **dadurch gekennzeichnet, dass** es mindestens eine Luftausgabevorrichtung (D) nach einem der vorhergehenden Ansprüche umfasst.

10. Fahrzeug nach Anspruch 9, **dadurch gekennzeichnet, dass** es des Typs Kraftfahrzeug ist.

## Claims

1. An air dispensing device (D) for a first end (E1) of a conduit (CD) suitable for supplying air to chamber (H) of a system, said device (D) including a body (CP) suitable to be installed in said first end (E1) and to which shutter means (A) are secured, which are suited to be placed between at least a closed position and an open position, prohibiting and permitting said supply of the chamber (H) respectively, **characterized in that** it further includes i) a nozzle (B) slidably mounted in a second end (E2) forming part of a pipe (TA), suitable for channelling small drops of liquid, and secured to said body (CP), and ii) coupling means (MC) suitable for sliding said nozzle (B) between a rear position, in which it includes a terminal portion (PT) housed in said first end (E1) when said shutter means (A) are in their closed position, and a front position in which its terminal portion (PT) is placed at the exterior of said first end (E1) when said shutter means (A) are in their open position, so as to deliver said small drops downstream of said shutter means (A) so that they are mixed with the flow of air exiting through said first end (E1).

2. The device according to claim 1, **characterized in that** said coupling means (MC) are of mechanical type.

3. The device according to claim 2, **characterized in that** said coupling means (MC) include at least one link including a first end secured to said shutter means (A) and a second end opposite the first end and secured to said nozzle (B).

4. The device according to claim 3, **characterized in that** said coupling means (MC) include two links secured to said shutter means (A) and to said nozzle (B) at two different locations.

5. The device according to one of claims 3 and 4, **characterized in that** each link (MC) is a spring of spiral type.

6. The device according to claim 2, **characterized in that** said coupling means (MC) include at least two toothed wheels which mesh and which for one of these is secured to said nozzle (B).

7. The device according to one of claims 1 to 6, **characterized in that** said shutter means (A) are rotatably mounted on said body (CP).

8. The device according to one of claims 1 to 7, **characterized in that** said second end (E2) of the pipe (TA) is secured fixedly to said body (CP) in a central portion of the latter (CP) which corresponds substantially to the centre of said first end (E1) of the conduit (CD).

9. A vehicle including a passenger compartment defining a chamber (H), **characterized in that** it includes at least one air dispensing device (D) according to one of the preceding claims.

10. The vehicle according to claim 9, **characterized in that** it is of the automobile type.
